# EUROPÄISCHE PATENTSCHRIFT

(11) **EP 1 460 394 B1**
(45) Veröffentlichungstag und Bekanntmachung des Hinweises auf die Patenterteilung: **28.11.2012**
(21) Anmeldenummer: 04006376.0
(22) Anmeldetag: 17.03.2004
(51) Int. Cl.: G01F 1/60

(54) **Method of regulating the coil current of electromagnetic flow sensors**
Méthode de régulation de courant de bobine d'un capteur de débit électromagnétique
Verfahren zum Regeln des Spulenstroms von magnetisch-induktiven Durchflussaufnehmern

(30) Priorität: 18.03.2003 DE 10312058
(43) Veröffentlichungstag der Anmeldung: 22.09.2004
(73) Patentinhaber: Endress+Hauser Flowtec AG, 4153 Reinach (BL) (CH)
(72) Erfinder: Budmiger, Thomas, 4107 Ettingen (CH)
(74) Vertreter: Andres, Angelika Maria

(56) Entgegenhaltungen:
- EP-A- 0 969 268
- US-A- 4 204 240
- US-A- 4 784 000

## Beschreibung

Die Erfindung bezieht sich auf ein magnetisch-induktives Durchflußmeßgerät, welches den Volumenstrom eines Meßmediums bestimmt, das ein Meßrohr in Richtung der Meßrohrachse durchfließt. Diese sog. MIDs weisen eine Spulenanordnung auf, die ein das Meßrohr durchsetzendes, im wesentlichen quer zur Meßrohrachse verlaufendes und periodisch die Richtung änderndes Magnetfeld erzeugt. Weiterhin haben sie zumindest eine mit dem Meßmedium gekoppelten Meßelektrode, die in einem Bereich des Meßrohres angeordnet ist, und eine Regel-/Auswerteeinheit, die anhand der in die zumindest eine Meßelektrode induzierten Meßspannung Information über den Volumenstrom des Meßmediums in dem Meßrohr liefert. Die zumindest eine Meßelektrode ist mit dem Meßmedium galvanisch oder kapazitiv gekoppelt.

Magnetisch-induktive Durchflußmeßgeräte nutzen für die volumetrische Strömungsmessung das Prinzip der elektrodynamischen Induktion aus: Senkrecht zu einem Magnetfeld bewegte Ladungsträger des Meßmediums induzieren in gleichfalls im wesentlichen senkrecht zur Strömungsrichtung des Meßmediums angeordnete Meßelektroden eine Spannung. Diese in die Meßelektroden induzierte Spannung ist proportional zu der über den Querschnitt des Meßrohres gemittelten Strömungsgeschwindigkeit des Mediums; sie ist also proportional zum Volumenstrom.

Im Idealfall entspricht der Stromverlauf in der Spulenanordnung dem Verlauf des Magnetfelds. Aufgrund von Wirbelströmen, die während des Umschaltens des Magnetfeldes in den Polschuhen und Kernen der Spulenanordnung entstehen, treten in der Realität Abweichungen vom Idealfall auf. Der außerhalb der Spulenanordnung gemessene Spulenstrom entspricht daher der Summe des in der Spule fließenden Stroms und des durch die Wirbelströme erzeugten Stroms. Wird der außerhalb der Spulenanordnung gemessene Strom als Regelgröße verwendet, ist folglich zwar der Strom nicht aber das Magnetfeld konstant. Dies gilt solange, wie die Wirbelströme nicht abgeklungen sind.

Um diesen Mißstand zu beseitigen, wird in der EP 0 969 268 A1 vorgeschlagen, den Strom nicht direkt zur Nachführung der Spannung über der Spulenanordnung zu verwenden. Zum raschen Umkehren der Richtung des Magnetfeldes wird beim Umschalten des Magnetfeldes für eine Anstiegsdauer eine Überspannung an die Spulenanordnung angelegt. Die Dauer der Überspannung wird sukzessive so eingestellt, daß mit Ablauf der Anstiegsdauer das Strommaximums erreicht ist, so daß kein weiterer Anstieg des Spulenstroms auftritt. Nach Erreichen des Maximums nähert sich der Spulenstrom assymptotisch dem Strom-Endwert an. Gemäß der aus dem Stand der Technik bekannten Lösung, hat das Magnetfeld mit Erreichen des Strommaximums einen dem konstanten Strom-Endwert entsprechenden konstanten Magnetfeld-Endwert. Die Dauer der Umschaltphase ist durch die Charakteristik der Spulenstroms gegeben. Da die Stabilität des Meßsignals u.a. auch durch die induktive Einkopplung von der Spulenanordnung zu den Meßelektroden beeinträchtigt wird, müssen während der Messung der Spannungsdifferenz zwischen den Meßelektroden sowohl die Spannung über der Spulenanordnung als auch der Strom durch die Spulen konstant sein. Bei der aus dem Stand der Technik bekannten Lösung ist dies aufgrund der asymptotischen Annäherung an den Endwert erst der Fall, wenn die Wirbelströme vollständig abgeklungen sind.

Der Erfindung liegt die Aufgabe zugrunde, bei einer Vorrichtung zum Messen des Volumenstroms die Meßrate und damit die Meßgenauigkeit zu erhöhen.

Die Aufgabe wird dadurch gelöst, daß die Regel-/Auswerteeinheit beim Umschalten des Magnetfeldes B für eine Referenz-Zeitspanne *tᵣₑᵥ* eine Überspannung an die Spulenanordnung anlegt, wobei die Überspannung so bemessen ist, daß der durch die Spulenanordnung fließende Strom nach Ablauf der Referenz-Zeitspanne *tᵣₑᵥ* stetig gegen einen im wesentlichen konstanten Strom-Endwert abfällt, und daß die Regel-/Auswerteeinheit näherungsweise nach Ablauf der Referenz-Zeitspanne *t_{ref}* für eine vorgegebene Zeitspanne *tₛₕₒᵣₜ* eine Gegenspannung an die Spulenanordnung anlegt, wobei die Zeitspanne *tₛₕₒᵣₜ* so bemessen ist, daß der Einfluß der während des Umschaltvorgangs in die Spulenanordnung induzierten Wirbelströme näherungsweise kompensiert wird.

Gemäß einer Ausgestaltung der erfindungsgemäßen Vorrichtung ist vorgesehen, daß die Regel-/Auswerteeinheit die elektromagnetische Spulenanordnung während der Zeitspanne *tₛₕₒᵣₜ* kurzschließt. Alternativ wird vorgeschlagen, daß die Regel-/Auswerteeinheit die Richtung des durch die Spulenanordnung fließenden Stroms während der Zeitspanne *tₛₕₒᵣₜ* umkehrt.

Eine vorteilhafte Weiterbildung der erfindungsgemäßen Vorrichtung schlägt vor, daß die Regel-/Auswerteeinheit die Zeitspanne *tₛₕₒᵣₜ* so bemißt, daß der durch die Spulenanordnung fließende Strom nach Ablauf der Zeitspanne *tₛₕₒᵣₜ* näherungsweise den konstanten Strom-Endwert erreicht hat.

Die Ermittlung der optimalen Zeitspanne *tₛₕₒᵣₜ* erfolgt bevorzugt mittels eines Trial-/Error-Verfahrens. Die während einer Umschaltphase ermittelten Meßwerte werden zur Optimierung der Zeitspanne *tₛₕₒᵣₜ* für die nachfolgende Umschaltphase verwendet.

Bevorzugt wird folgendermaßen vorgegangen: Die Regel-/Auswerteeinheit legt während eines ersten Umschaltvorgangs für eine vorgegebene Zeitspanne *tₛₕₒᵣₜ* eine Gegenspannung an die Spulenanordnung an; nachfolgend erfaßt die Regel-/Auswerteinheit mehrere Strom-Meßwerte innerhalb der vorgegebenen Zeitspanne *t_{cont}* ; für den Fall, daß mit Ablauf der Zeitspanne *tₛₕₒᵣₜ* der Strom-Endwert nicht erreicht ist, wird die Zeitspanne *tₛₕₒᵣₜ* vergrößert; für den Fall, daß mit Ablauf der Zeitspanne *tₛₕₒᵣₜ* der Strom-Endwert vorzeitig erreicht ist, wird die Zeitspanne *tₛₕₒᵣₜ* verkleinert.

Die Erfindung wird anhand der nachfolgenden Zeichnungen näher erläutert. Es zeigt:
Fig. 1: eine schematische Darstellung einer ersten Ausgestaltung der erfindungsgemäßen Vorrichtung,
Fig. 2: ein stark vereinfachtes Ersatzschaltbild der Spulenanordnung,
Fig. 3: eine graphische Darstellung des zeitlichen Verlaufs des Spulenstroms und des zeitlichen Verlaufs des Magnetfeldes bei der aus dem Stand der Technik bekannten Lösung,
Fig. 4: eine graphische Darstellung des zeitlichen Verlaufs der an der Spulenanordnung anliegenden Spannung bei der aus dem Stand der Technik bekannten Lösung,
Fig. 5: eine graphische Darstellung des zeitlichen Verlaufs der an der Spulenanordnung anliegenden Spannung bei der erfindungsgemäßen Vorrichtung und
Fig. 6: eine graphische Darstellung des zeitlichen Verlaufs des Spulenstroms und des zeitlichen Verlaufs des Magnetfeldes bei der erfindungsgemäßen Vorrichtung.

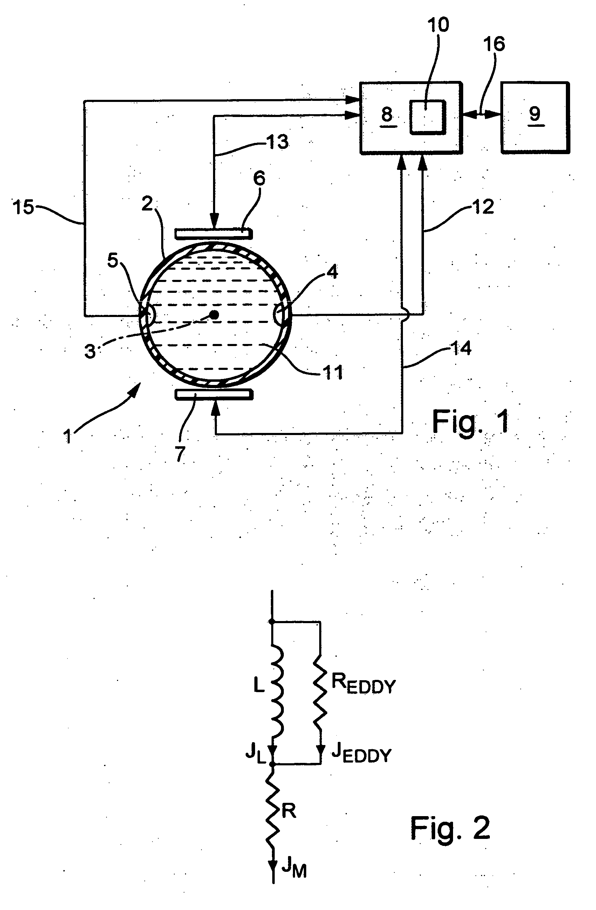

Fig. 1 zeigt eine schematische Darstellung einer ersten Ausgestaltung der erfindungsgemäßen Vorrichtung 1. Das Meßrohr 2 wird von dem Meßmedium 11 in Richtung der Meßrohrachse 3 durchflossen. Das Meßmedium 11 ist zumindest in geringem Umfang elektrisch leitfähig. Das Meßrohr 2 selbst ist aus einem nicht-leitfähigen Material gefertigt, oder es ist zumindest an seiner Innenfläche mit einem nicht-leitfähigen Material ausgekleidet.

Das senkrecht zur Strömungsrichtung des Meßmediums 11 ausgerichteten Magnetfeld B wird über die diametral angeordnete Spulenanordnung 6, 7 bzw. über zwei Elektromagnete erzeugt. Unter dem Einfluß der Magnetfeldes B wandern in dem Meßmedium 11 befindliche Ladungsträger je nach Polarität zu den beiden entgegengesetzt gepolten Meßelektroden 4, 5 ab. Die sich an den Meßelektroden 4, 5 aufbauende Spannung ist proportional zu der über den Querschnitt des Meßrohres 2 gemittelten Strömungsgeschwindigkeit des Meßmediums 11, d. h. sie ist ein Maß für den Volumenstrom des Meßmediums 11 in dem Meßrohr 2. Das Meßrohr 2 ist übrigens über Verbindungselemente, z. B. Flansche, die in der Zeichnung nicht gesondert dargestellt sind, mit einem Rohrsystem, durch das das Meßmedium 11 hindurchströmt, verbunden.

In den beiden gezeigten Fällen befinden sich die Meßelektroden 4, 5 in direktem Kontakt mit dem Meßmedium 11; die Kopplung kann jedoch, wie bereits an vorhergehender Stelle erwähnt, auch kapazitiver Natur sein.

Über Verbindungsleitungen 12, 13 sind die Meßelektroden 4, 5 mit der Rege/Auswerteeinheit 8 verbunden. Die Verbindung zwischen den Spulenanordnungen 6, 7 und der Regel-/Auswerteeinheit 8 erfolgt über die Verbindungsleitungen 14, 15. Die Regel-/Auswerteeinheit 8 ist über die Verbindungsleitung 16 mit einer Eingabe-/Ausgabeeinheit 9 verbunden. Der Auswerte-/Regeleinheit 8 ist die Speichereinheit 10 zugeordnet.

Bei einem idealen Magnetsystem bzw. bei einer idealen Spulenanordnung 6, 7 entspricht der Stromverlauf dem Verlauf des von der Spulenanordnung 6, 7 erzeugten Magnetfeldes. Die Spulen einer Spulenanordnung 6, 7, die bei magnetisch-induktiven Meßaufnehmern zum Einsatz kommen, weisen üblicherweise Spulenkerne und/oder Polschuhe auf. Die Regel-/Auswerteeinheit 8 beaufschlagt die Spulenanordnung 6, 7 so mit Strom, daß das Magnetfeld B periodisch seine Richtung ändert. Idealerweise ist in beiden Halbperioden der Spulenstrom *I_{L}* konstant, entgegengesetzt und betragsgleich. Aufgrund der in den Polschuhen und Spulenkernen entstehenden Wirbelströme tritt dieser Idealfall in der Realität nicht auf. Vielmehr entspricht der außerhalb der Spulenanordnung 6, 7 gemessene Strom *I_{M}* immer dem Summenstrom *I_{M},* der sich aus dem Spulenstrom *I_{L}* und dem Wirbelstrom *I_{EDDY}* zusammensetzt. Da stets der außerhalb der Spulenanordnung 6, 7 gemessene Strom *I_{M}* von der Regel-/Auswerteeinheit 8 als Regelgröße verwendet wird, ist zwar der Strom *I_{M}* konstant, nicht jedoch das Magnetfeld B, das das Meßrohr 2 durchsetzt. Ein entsprechendes Ersatzschaltbild der Spulenanordnung 6, 7 ist in der Fig. 2 dargestellt.

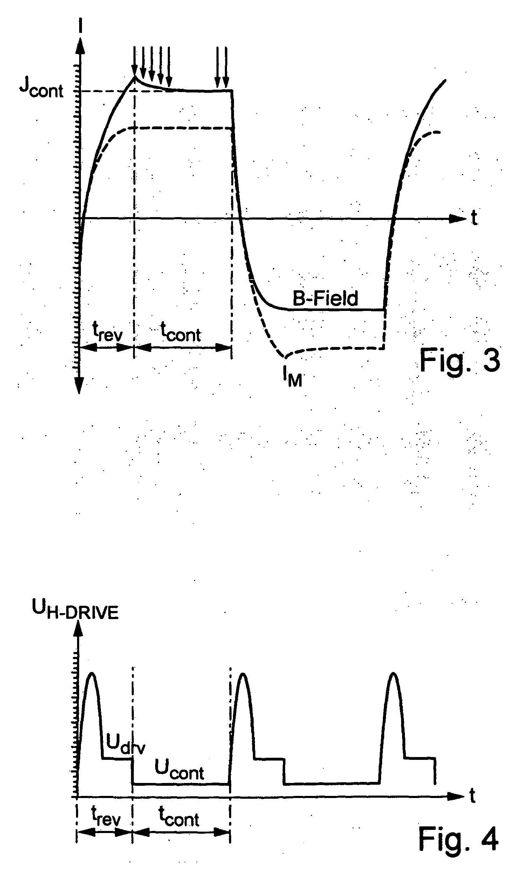

Aus dem Stand der Technik, insbesondere wird an diesem Zusammenhang auf die EP 0 969 268 A1 verwiesen, ist eine Lösung bekannt geworden, wie die während der Umpolung des Magnetfeldes entstehenden Wirbelströme kompensiert werden können. Die entsprechenden graphischen Darstellungen der zeitlichen Änderungen des Spulenstroms *I_{M},* des Magnetfeldes B und der an die Spulenanordnung 6, 7 angelegten Spannung sind in den Figuren Fig. 3 und Fig. 4 zu sehen. Insbesondere wird bei der bekannten Lösung der Spulenstrom *I_{M}* nicht direkt zur Nachführung der Spannung über der Spulenanordnung 6, 7 verwendet. Vielmehr wird der während der Zeitspanne *t_{cont}* fließende Spulenstroms *I_{M}* digitalisiert. Die gemessenen Stromwerte werden zur Berechnung des Spannungsprofils für die nächste Halbperiode des Magnetfeldes B verwendet. Es kommt also ein Trial-/Error-Verfahren zum Einsatz: Die während der Zeitspanne *tᵣₑᵥ* an der Spulenanordnung 6, 7 anliegende Überspannung *Uᵣₑᵥ* wird sukzessive so abgestimmt, daß der Spulenstrom *I_{M}* während der verbleibenden Zeitspanne *t_{cont}* einer jeden Halbperiode stetig gegen einen konstanten Strom-Endwert *I_{cont}* hin abfällt. Bei der bekannten Lösung wird also das Augenmerk darauf gelegt, daß die Zeitspanne *t_{ref}*, während der die Überspannung *U_{drv}* an der Spulenanordnung 6, 7 angelegt ist, so bemessen ist, daß der gemessene Spulenstrom *I_{M}* während der Zeitspanne *t_{cont}* nicht mehr ansteigt. Zeigt sich ein Anstieg, so ist dies ein klares Anzeichen dafür, daß die Zeitspanne *tᵣₑᵥ* zu kurz gewählt war. Als Folge hiervon wird die Regel-/Auswerteeinheit 8 die Zeitspanne *tᵣₑᵥ* während der nachfolgenden Halbperioden solange um geeignete Beträge erhöhen, bis der gemessene Spulenstrom *I_{M}* das gewünschte Verhalten aufweist.

Während der eigentlichen Messung des Volumenstroms muß sowohl die Spannung über der Spulenanordnung 6, 7 als auch der durch die Spulenanordnung fließende Strom *I_{M}* konstant sein, da die Stabilität des Meßsignals u.a. auch durch die induktive Einkopplung von der Spulenanordnung 6, 7 zu den Meßelektroden 4, 5 negativ beeinflußt wird. Bei der aus dem Stand der Technik bekannt gewordenen Lösung ist dies erst der Fall, wenn ein wesentlicher Anteil der Zeitspanne *t_{cont}* vorbei sind. Damit ist die Anzahl der während der Zeitspanne *t_{cont}* möglichen exakten Messungen von vorneherein nahezu auf die Hälfe der maximal möglichen Messungen beschränkt. Die Erfindung schägt nun eine Lösung vor, wie die während jeder Halbperiode maximal zur Verfügung stehende Zeitspanne *t_{cont}* erheblich ausgedehnt werden kann.

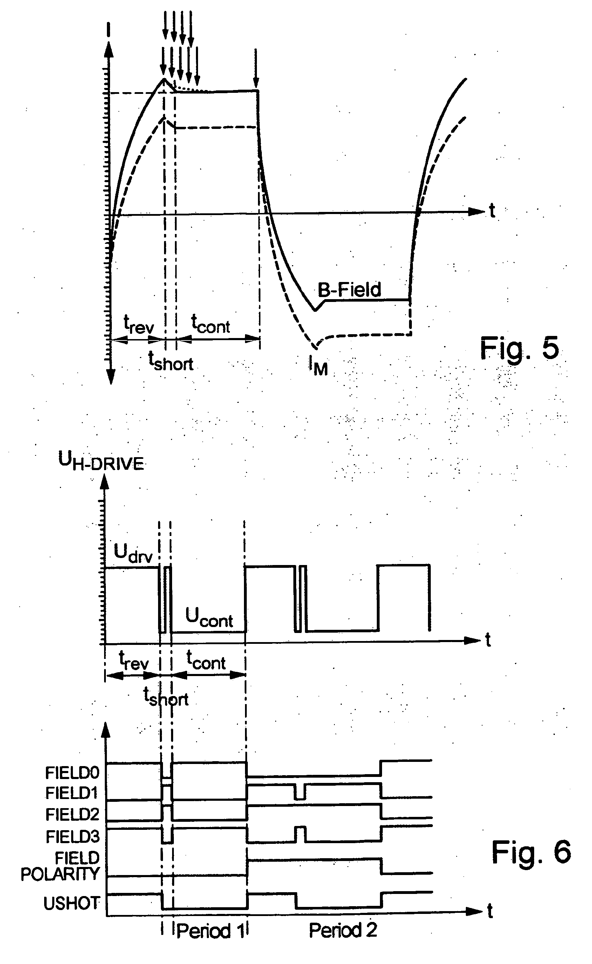

Die Arbeitsweise der erfindungsgemäßen Vorrichtung bzw. das erfindungsgemäße Verfahren zur aktiven Kompensation von Wirbelströmen bei einem magnetisch-induktiven Durchflußmeßgerät 1 ist in den Figuren Fig. 5 und Fig. 6 dargestellt. Der gravierende Unterschied zwischen der Erfindung und dem Stand der Technik ist aus Fig. 5 ersichtlich. Hierbei kennzeichnet die durchgzogene Linie den Meßstrom *I_{M},* wie er sich bei der erfindungsgemäßen Lösung darstellt; hingegen zeigt die gepunktete Linie das zeitliche Verhalten des Meßstroms *I_{M}* bei der aus dem Stand der Technik bekannt gewordenen Lösung. Bei der erfindungsgemäßen Lösung ist der konstante Strom-Endwert *I_{cont}* mit Ablauf der Zeitspanne *tₛₕₒᵣₜ* erreicht; bei der bekannten Lösung wird der der konstante Strom-Endwert *I_{cont}* erst zu einem späteren Zeitpunkt innerhalb der Zeitspanne *t_{cont}* erreicht.

Erfindungsgemäß wird mit Ablauf der Zeitspanne *tᵣₑᵥ'* während der an der Spulenanordnung 6, 7 eine Überspannung *Uᵣₑᵥ* anliegt, für eine Zeitspanne *tₛₕₒᵣₜ* eine Gegenspannung *U_{G}* an die Spulenanordnung 6, 7 angelegt. Hierzu schließt die Regel-/Auswerteeinheit 8 die Spulenanordnung 6, 7 während der Zeitspanne *tₛₕₒᵣₜ* kurz; oder die die Regel-/Auswerteeinheit 8 kehrt die Richtung des durch die Spulenanordnung fließenden Stroms während der Zeitspanne *tₛₕₒᵣₜ* um. Bevorzugt wird die optimale Zeitspanne *tₛₕₒᵣₜ* durch ein Trial-/Error-Verfahren ermittelt. Während eines ersten Umschaltvorgangs legt die Regel-/Auswerteeinheit 8 für eine vorgegebene Zeitspanne *tₛₕₒᵣₜ* eine Gegenspannung *U_{G}* an die Spulenanordnung 6, 7 an. Nachfolgend erfaßt die Regel-/Auswerteinheit 8 mehrere Strom-Meßwerte innerhalb der vorgegebenen Zeitspanne *t_{cont}*. Für den Fall, daß mit Ablauf der Zeitspanne *tₛₕₒᵣₜ* der Strom-Endwert *I_{cont}* nicht erreicht ist, wird die Zeitspanne *tₛₕₒᵣₜ* vergrößert; für den Fall, daß vor Ablauf der Zeitspanne *tₛₕₒᵣₜ* der Strom-Endwert *I_{cont}* bereits erreicht ist, wird die Zeitspanne *tₛₕₒᵣₜ* verkleinert.

Durch aktives Kompensieren der Wirbelströme kann die Abklingdauer der Wirbelströme signifikant reduziert werden. Dies geschieht durch kurzzeitiges Anlegen einer Gegenspannung *U_{G}* an die Spulenanordnung 6, 7 des magnetisch-induktiven Durchflußmeßgeräts 1.

### Bezugszeichenliste

- 1: erfindungsgemäße Vorrichtung
- 2: Meßrohr
- 3: Meßrohrachse
- 4: Meßelektrode
- 5: Meßelektrode
- 6: Spulenanordnung
- 7: Spulenanordnung
- 8: Regel-/Auswerteeinheit
- 9: Eingabe-/Ausgabeeinheit
- 10: Speichereinheit
- 11: Meßmedium
- 12: Verbindungsleitung
- 13: Verbindungsleitung
- 14: Verbindungsleitung
- 15: Verbindungsleitung
- 16: Verbindungsleitung

## Patentansprüche

1. Vorrichtung zum Messen des Volumenstroms eines Meßmediums (11), das ein Meßrohr (2) in Richtung der Meßrohrachse (3) durchfließt, mit einer Spulenanordnung (6, 7), die ein das Meßrohr (2) durchsetzendes, im wesentlichen quer zur Meßrohrachse (3) verlaufendes und periodisch die Richtung änderndes Magnetfeld (B) erzeugt, mit zumindest einer mit dem Meßmedium (2) gekoppelten Meßelektrode (4; 5), die in einem Bereich des Meßrohres (2) angeordnet ist, und mit einer Regel-/Auswerteeinheit (8), die anhand der in die zumindest eine Meßelektrode (4; 5) induzierten Meßspannung Information über den Volumenstrom des Meßmediums (11) in dem Meßrohr (2) liefert, wobei
die Regel-/Auswerteeinheit (8) beim Umschalten des Magnetfeldes (B) für eine Referenz-Zeitspanne (*t_{ref}*) eine Überspannung (*U_{drv}*) an die Spulenanordnung (6, 7) anlegt,
**dadurch gekennzeichnet,**
**dass** die Überspannung (*U_{drv}*) so bemessen ist, daß der durch die Spulenanordnung (6, 7) fließende Strom (*I_{M}*) nach Ablauf der Referenz-Zeitspanne (*t_{ref}*) stetig gegen einen im wesentlichen konstanten Strom-Endwert (*I_{cont}*) abfällt, und
**daß** die Regel-/Auswerteeinheit (8) näherungsweise nach Ablauf der Referenz-Zeitspanne (*I_{ref}*) für eine vorgegebene Zeitspanne (*tₛₕₒᵣₜ*) die elektromagnetische Spulenanordnung (6, 7) kurzschließt, wobei die Zeitspanne (*tₛₕₒᵣₜ*) so bemessen ist, daß der Einfluß der während des Umschakvorgangs in die Spulenanordnung (6, 7) induzierten Wirbelströme näherungsweise kompensiert wird.

2. Vorrichtung zum Messen des Volumenstroms eines Meßmediums (11), das ein Meßrohr (2) in Richtung der Meßrohrachse (3) durchfließt, mit einer Spulenanordnung (6, 7), die ein das Meßrohr (2) durchsetzendes, im wesentlichen quer zur Meßrohrachse (3) verlaufendes und periodisch die Richtung änderndes Magnetfeld (B) erzeugt, mit zumindest einer mit dem Meßmedium (2) gekoppelten Meßelektrode (4; 5), die in einem Bereich des Meßrohres (2) angeordnet ist, und mit einer Regel-/Auswerteeinheit (8), die anhand der in die zumindest eine Meßelektrode (4; 5) induzierten Meßspannung Information über den Volumenstrom des Meßmediums (11) in dem Meßrohr (2) liefert, wobei
die Regel-/Auswerteeinheit (8) beim Umschalten des Magnetfeldes (B) für eine Referenz-Zeitspanne (*t_{ref}*) eine Überspannung (*U_{drv}*) an die Spulenanordnung (6, 7) anlegt,
**dadurch gekennzeichnet,**
**daß** die Überspannung (*U_{drv}*) so bemessen ist, daß der durch die Spulenanordnung (6, 7) fließende Strom (*I_{M}*) nach Ablauf der Referenz-Zeitspanne (*t_{ref}*) stetig gegen einen im wesentlichen konstanten Strom-Endwert (*I_{cont}*) abfällt, und
**daß** die Regel-/Auswerteeinheit (8) näherungsweise nach Ablauf der Referenz-Zeitspanne (*t_{ref}*) für eine vorgegebene Zeitspanne (*tₛₕₒᵣₜ*) die Richtung des durch die Spulenanordnung (6, 7) fließenden Stroms (*I_{M}*) umkehrt, wobei die Zeitspanne (*tₛₕₒᵣₜ*) so bemessen ist, daß der Einfluß der während des Umschaltvorgangs in die Spulenanordnung (6, 7) induzierten Wirbelströme näherungsweise kompensiert wird.

3. Vorrichtung nach Anspruch 1 oder 2,
**dadurch gekennzeichnet,**
**daß** die Regel-/Auswerteeinheit (8) die Zeitspanne (*tₛₕₒᵣₜ*) so bemißt, daß der durch die Spulenanordnung (6, 7) fließende Strom (*I_{M}*) nach Ablauf der Zeitspanne (*tₛₕₒᵣₜ*) näherungsweise den konstanten Strom-Endwert (*I_{cont}*) erreicht hat.

4. Vorrichtung nach Anspruch 3,
**dadurch gekennzeichnet,**
**daß** die Regel-/Auswerteeinheit (8) die Zeitspanne (*tₛₕₒᵣₜ*) mittels eines Trial-/Error-Verfahrens ermittelt.

5. Vorrichtung nach Anspruch 1 und 4,
**dadurch gekennzeichnet,**
**daß** die Regel-/Auswerteeinheit (8) während eines ersten Umschaltvorgangs für eine vorgegebene Zeitspanne (*tₛₕₒᵣₜ*) die elektromagnetische Spulenanordnung (6, 7) kurzschließt,
**daß** die Regel-/Auswerteinheit (8) mehrere Strom-Meßwerte innerhalb der vorgegebenen Zeitspanne (*t_{cont}*) erfaßt,
**daß** für den Fall, daß mit Ablauf der Zeitspanne (*tₛₕₒᵣₜ*) der Strom-Endwert (*I_{cont}*) nicht erreicht ist, die Regel-/Auswerteeinheit (8) die Zeitspanne (*tₛₕₒᵣₜ*) vergrößert, und
**daß** für den Fall, daß mit Ablauf der Zeitspanne (*tₛₕₒᵣₜ*) der Strom-Endwert (*I_{cont}*) vorzeitig erreicht ist, die Regel-/Auswerteeinheit die Zeitspanne (*tₛₕₒᵣₜ*) verkleinert.

6. Vorrichtung nach Anspruch 2 und 4,
**dadurch gekennzeichnet,**
**daß** die Regel-/Auswerteeinheit (8) während eines ersten Umschaltvorgangs für eine vorgegebene Zeitspanne (*tₛₕₒᵣₜ*) die Richtung des durch die Spulenanordnung (6, 7) fließenden Stroms (*I_{M}*) umkehrt,
**daß** die Regel-/Auswerteinheit (8) mehrere Strom-Meßwerte innerhalb der vorgegebenen Zeitspanne (*t_{cont}*) erfaßt,
**daß** für den Fall, daß mit Ablauf der Zeitspanne (*tₛₕₒᵣₜ*) der Strom-Endwert (*I_{cont}*) nicht erreicht ist, die Regel-/Auswerteeinheit (8) die Zeitspanne (*tₛₕₒᵣₜ*) vergrößert, und
**daß** für den Fall, daß mit Ablauf der Zeitspanne (*tₛₕₒᵣₜ*) der Strom-Endwert (*I_{cont}*) vorzeitig erreicht ist, die Regel-/Auswerteeinheit die Zeitspanne (*tₛₕₒᵣₜ*) verkleinert.

7. Vorrichtung nach Anspruch 1,
**dadurch gekennzeichnet,**
**daß** die zumindest eine Meßelektrode (4, 5) mit dem Meßmedium (11) galvanisch oder kapazitiv gekoppelt ist.

## Claims

1. Unit to measure the volume flow of a medium under measurement (11) which flows through a measuring tube (2) in the direction of the measuring tube axis (3), with a coil arrangement (6, 7) which generates a magnetic field (B) that passes through the measuring tube (2), is essentially perpendicular to the measuring tube axis (3) and periodically changes direction, with at least one measuring electrode (4, 5) that is coupled with the medium under measurement (2) said measuring electrode being arranged in an area of the measuring tube (2), and with a control/evaluation unit (8) which uses the measuring voltage induced in the one measuring electrode at least (4, 5) to deliver information about the volume flow of the medium under measurement (11) in the measuring tube (2), wherein
the control/evaluation unit (8) applies an overvoltage (U_{drv}) to the coil arrangement (6, 7) when the magnetic field (B) is switched for a reference time (t_{ref}),
**characterized in that**
the size of the overvoltage (U_{drv}) is such that the current (I_{M}) flowing through the coil arrangement (6, 7) constantly falls vis-á-vis a primarily constant current end value (I_{cont}) when the reference time (t_{ref}) elapses, and
**in that** the control/evaluation unit (8) short-circuits the electromagnetic coil arrangement (6, 7) for a predefined time (tₛₕₒᵣₜ) approximately after the reference time (t_{ref}) has elapsed, wherein the time (tₛₕₒᵣₜ) is such that the influence of the Foucault current induced in the coil arrangement (6, 7) during the switchover process is compensated approximately.

2. Unit to measure the volume flow of a medium under measurement (11) which flows through a measuring tube (2) in the direction of the measuring tube axis (3), with a coil arrangement (6, 7) which generates a magnetic field (B) that passes through the measuring tube (2), is essentially perpendicular to the measuring tube axis (3) and periodically changes direction, with at least one measuring electrode (4, 5) that is coupled with the medium under measurement (2) that is arranged in an area of the measuring tube (2), and with a control/evaluation unit (8) which uses the measuring voltage induced in the one measuring electrode at least (4, 5) to deliver information about the volume flow of the medium under measurement (11) in the measuring tube, wherein
the control/evaluation unit (8) applies an overvoltage (U_{drv}) to the coil arrangement (6, 7) when the magnetic field (B) is switched for a reference time (t_{ref}),
**characterized in that**
the size of the overvoltage (U_{drv}) is such that the current (I_{M}) flowing through the coil arrangement (6, 7) constantly falls vis-á-vis a primarily constant current end value (I_{cont}) when the reference time (t_{ref}) elapses, and
**in that** the control/evaluation unit (8) reverses the direction of the current (I_{M}) flowing through the coil arrangement (6, 7) for a predefined time (tₛₕₒᵣₜ) approximately after the reference time (t_{ref}) has elapsed, wherein the time (tₛₕₒᵣₜ) is such that the influence of the Foucault current induced in the coil arrangement (6, 7) during the switchover process is compensated approximately.

3. Unit as claimed in Claim 1 or 2,
**characterized in that**
the control/evaluation unit (8) calculates the time span (tₛₕₒᵣₜ) in such a way that the current (I_{M}) flowing through the coil arrangement (6, 7) has approximately reached the constant current end value (I_{cont}) when the time (tₛₕₒᵣₜ) has elapsed.

4. Unit as claimed in Claim 3,
**characterized in that**
the control/evaluation unit (8) determines the time (tₛₕₒᵣₜ) by trial and error.

5. Unit as claimed in Claim 1 and 4,
**characterized in that**
the control/evaluation unit (8) short-circuits the electromagnetic coil arrangement (6, 7) for a predefined time (tₛₕₒᵣₜ) during a first switchover process,
**in that** the control/evaluation unit (8) measures several current measured values within the predefined time (t_{cont}),
**in that** the control/evaluation unit (8) increases the time (tₛₕₒᵣₜ) in instances in which the current end value (I_{cont}) is not reached when the time (tₛₕₒᵣₜ) has elapsed, and
**in that** the control/evaluation unit reduces the time (tₛₕₒᵣₜ) in instances in which the current end value (I_{cont}) is prematurely reached when the time (tₛₕₒᵣₜ) has elapsed.

6. Unit as claimed in Claim 2 and 4,
**characterized in that**
the control/evaluation unit (8) reverses the direction of the current (I_{M}) flowing through the coil arrangement (6, 7) for a predefined time (tₛₕₒᵣₜ) during a first switchover process, **in that** the control/evaluation unit (8) measures several current measured values within the predefined time (t_{cont}),
**in that** the control/evaluation unit (8) increases the time (tₛₕₒᵣₜ) in instances in which the current end value (I_{cont}) is not reached when the time has (tₛₕₒᵣₜ) elapsed, and
**in that** the control/evaluation unit reduces the time (tₛₕₒᵣₜ) in instances in which the current end value (I_{cont}) is prematurely reached when the time has (tₛₕₒᵣₜ) elapsed.

7. Unit as claimed in Claim 1,
**characterized in that**
the one measuring electrode (4, 5) at least is galvanically or capacitively coupled with the medium under measurement (11).

## Revendications

1. Dispositif destiné à la mesure du débit volumique d'un produit mesuré (11), qui circule à travers un tube de mesure (2) en direction de l'axe de tube de mesure (3), avec un arrangement de bobines (6, 7), qui génère un champ magnétique (B) traversant le tube de mesure (2), pour l'essentiel perpendiculaire à l'axe de tube de mesure (3) et changeant périodiquement la direction, avec au moins une électrode de mesure (4, 5) couplée avec le produit mesuré (2), laquelle est disposée dans une zone du tube de mesure (2), et avec une unité de régulation / d'exploitation (8), qui fournit, sur la base de la tension de mesure induite dans l'au moins une électrode de mesure (4, 5), l'information sur le débit volumique du produit mesuré (11) dans le tube de mesure (2), pour lequel l'unité de régulation / d'exploitation (8) applique, en cas d'inversion du champ magnétique (B) pendant une plage de temps de référence (t_{ref}), une surtension (U_{drv}) à l'arrangement de bobines (6, 7),
**caractérisé en ce**
**que** la surtension (U_{drv}) est dimensionnée de telle sorte que le courant (I_{M}) circulant à travers l'arrangement de bobines (6, 7) chute, après l'écoulement de la plage de temps de référence (t_{ref}), progressivement vers une valeur de courant finale (I_{cont}) pour l'essentiel constante, et
en ce que l'unité de régulation / d'exploitation (8) court-circuite, pendant une plage de temps (tₛₕₒᵣₜ) prédéfinie, l'arrangement de bobines (6, 7) électromagnétique approximativement après l'écoulement de la plage de temps de référence (t_{ref}), la plage de temps (tₛₕₒᵣₜ) étant dimensionnée de telle manière que l'influence des courants de Foucault induits pendant le processus de commutation dans l'arrangement de bobines (6, 7) est approximativement compensée.

2. Dispositif destiné à la mesure du débit volumique d'un produit mesuré (11), qui circule à travers un tube de mesure (2) en direction de l'axe de tube de mesure (3), avec un arrangement de bobines (6, 7), qui génère un champ magnétique (B) traversant le tube de mesure (2), pour l'essentiel perpendiculaire à l'axe de tube de mesure (3) et changeant périodiquement la direction, avec au moins une électrode de mesure (4, 5) couplée avec le produit mesuré (2), laquelle est disposée dans une zone du tube de mesure (2), et avec une unité de régulation / d'exploitation (8), qui fournit, sur la base de la tension de mesure induite dans l'au moins une électrode de mesure (4, 5), l'information sur le débit volumique du produit mesuré (11) dans le tube de mesure (2), pour lequel l'unité de régulation / d'exploitation (8) applique, en cas d'inversion du champ magnétique (B) pendant une plage de temps de référence (t_{ref}), une surtension (U_{drv}) à l'arrangement de bobines (6, 7),
**caractérisé en ce**
**que** la surtension (U_{drv}) est dimensionnée de telle sorte que le courant (I_{M}) circulant à travers l'arrangement de bobines (6, 7) chute, après l'écoulement de la plage de temps de référence (t_{ref}), progressivement vers une valeur finale de courant (I_{cont}) pour l'essentiel constante, et
en ce que l'unité de régulation / d'exploitation (8) inverse, pendant une plage de temps (tₛₕₒᵣₜ) prédéfinie, le courant (I_{M}) circulant à travers l'arrangement de bobines (6, 7) électromagnétique approximativement après l'écoulement de la plage de temps de référence (t_{ref}), la plage de temps (tₛₕₒᵣₜ) étant dimensionnée de telle manière que l'influence des courants de Foucault induits pendant le processus de commutation dans l'arrangement de bobines (6, 7) est approximativement compensée.

3. Dispositif selon la revendication 1 ou 2,
**caractérisé en ce**
**que** l'unité de régulation / d'exploitation (8) dimensionne la plage de temps (tₛₕₒᵣₜ) de telle manière que le courant (I_{M}) circulant à travers l'arrangement de bobines (6, 7) atteint, après l'écoulement de la plage de temps (tₛₕₒᵣₜ), approximativement la valeur de courant finale (I_{cont}) constante.

4. Dispositif selon la revendication 3,
**caractérisé en ce**
**que** l'unité de régulation / d'exploitation (8) détermine la plage de temps (tₛₕₒᵣₜ) au moyen d'une méthode d'essai-erreur.

5. Dispositif selon la revendication 1 et 4,
**caractérisé en ce**
**que** l'unité de régulation / d'exploitation (8) court-circuite l'arrangement de bobines électromagnétique (6, 7) lors d'un premier processus de commutation pendant une plage de temps (tₛₕₒᵣₜ) prédéfinie,
en ce que l'unité de régulation / d'exploitation (8) mesure plusieurs valeurs de courant au sein de la plage de temps (t_{cont}) prédéfinie,
en ce que, pour le cas où la valeur finale du courant (I_{cont}) n'est pas atteinte avec l'écoulement de la plage de temps (tₛₕₒᵣₜ), l'unité de régulation / d'exploitation (8) agrandit la plage de temps (tₛₕₒᵣₜ), et
en ce que, pour le cas où la valeur finale du courant (I_{cont}) est atteinte prématurément avec l'écoulement de la plage de temps (tₛₕₒᵣₜ), l'unité de régulation / d'exploitation (8) diminue la plage de temps (tₛₕₒᵣₜ).

6. Dispositif selon la revendication 2 et 4,
**caractérisé en ce**
**que** l'unité de régulation / d'exploitation (8) inverse le sens du courant (I_{M}) circulant à travers l'arrangement de bobines (6, 7) lors d'un premier processus de commutation pendant une plage de temps (tₛₕₒᵣₜ) prédéfinie,
en ce que l'unité de régulation / d'exploitation (8) mesure plusieurs valeurs de courant au sein de la plage de temps (t_{cont}) prédéfinie,
en ce que, pour le cas où la valeur finale du courant (I_{cont}) n'est pas atteinte avec l'écoulement de la plage de temps (tₛₕₒᵣₜ), l'unité de régulation / d'exploitation (8) agrandit la plage de temps (tₛₕₒᵣₜ), et
en ce que, pour le cas où la valeur finale du courant (I_{cont}) est atteinte prématurément avec l'écoulement de la plage de temps (tₛₕₒᵣₜ), l'unité de régulation / d'exploitation (8) diminue la plage de temps (tₛₕₒᵣₜ).

7. Dispositif selon la revendication 1,
**caractérisé en ce**
**que** l'au moins une électrode de mesure (4, 5) est couplée avec le produit mesuré (11) par voie galvanique ou capacitive.
